# EUROPÄISCHE PATENTSCHRIFT

(11) **EP 0 591 800 B1**
(45) Veröffentlichungstag und Bekanntmachung des Hinweises auf die Patenterteilung: **19.03.1997**
(21) Anmeldenummer: 93115543.6
(22) Anmeldetag: 27.09.1993
(51) Int. Cl.: H01M 8/02, H01M 8/24, F28D 9/00

(54) **BENNSTOFFZELLENBLOCK**
FUEL CELL BATTERY
BATTERIE DE PILES A COMBUSTIBLE

(30) Priorität: 09.10.1992 DE 4234093
(43) Veröffentlichungstag der Anmeldung: 13.04.1994
(73) Patentinhaber: SIEMENS AKTIENGESELLSCHAFT, 80333 München (DE)
(72) Erfinder: Strasser, Karl, Dipl.-Ing., D-91058 Erlangen (DE); Sahler, Rainer, Dipl.-Ing., D-51065 Köln (DE); Mattejat, Arno, Dr., D-91088 Bubenreuth (DE)

(56) Entgegenhaltungen:
- DE-A- 3 321 984
- GB-A- 654 395
- PATENT ABSTRACTS OF JAPAN vol. 12, no. 3 (E-570)(2850) 7. Januar 1988 & JP-A-62 163 264 (ISHIKAWAJIMA HARIMA HEAVY IND CO LTD) 20. Juli 1987
- PATENT ABSTRACTS OF JAPAN vol. 12, no. 168 (E-611)(3015) 20. Mai 1988 & JP-A-62 278 758 (SUMITOMO PRECISION PROD CO LTD) 3. Dezember 1987
- PATENT ABSTRACTS OF JAPAN vol. 17, no. 057 (E-1315)4. Februar 1993 & JP-A-04 267 062 (MITSUBISHI HEAVY IND) 22. September 1992

## Beschreibung

Die Erfindung bezieht sich auf einen Brennstoffzellenblock, der ein Bauelement aus zwei zueinander parallel angeordneten Platten umfaßt.

Eine Brennstoffzelle besteht im allgemeinen aus einer elektrisch leitenden Stromübertragerplatte, einer Kathode, einer Ionen-leitenden Zwischenschicht, einer Anode und einer weiteren elektrisch leitenden Stromübertragerplatte, die in der genannten Reihenfolge als ebene Platten aufeinander gestapelt sind und eine Elektrolyt-Elektrodeneinheit bilden.

Brennstoffzellen dieses Aufbaus sind u.a. durch das "Fuel Cell Handbook" von Appelby and Foulkes, New York, 1989, durch den Aufsatz von K. Strasser "Brennstoffzellen für Elektrotraktion", VDI-Berichte Nr. 912, 1992, Seiten 125 - 145 sowie durch das deutsche Patent DE 27 29 640 bekannt. Weil die Brennstoffzelle chemisch gebundene Energie unmittelbar in elektrische Energie umsetzen kann, ermöglicht sie es, Brennstoff, wie z. B. Wasserstoff, Erdgas, Biogas, mit höherem Wirkungsgrad und mit geringerer Belastung für die Umwelt in elektrische Energie umzuwandeln, als es die bisher bekannten konventionellen Verbrennungskraftmaschinen, deren Wirkungsgrad durch den sogenannten Carnot'schen Prozess begrenzt ist, zu tun vermögen.

Ein Brennstoffzellenblock ist aus abwechselnd aufeinander gestapelten Elektrolyt-Elektrodeneinheiten, Gasräumen, Kühleinheiten und Druckkissen aufgebaut.

Zwischen diesen einzelnen Einheiten sind Dichtungen und eventuell Abstandshalter eingebaut. Die einzelnen Flüssigkeits - und Gasräume eines Brennstoffzellenblockes werden von axialen Kanälen aus durch in der Plattenebene verlaufende Kanäle, die durch die Dichtungen verlaufen, versorgt. Die axialen Kanäle verlaufen hierbei senkrecht zur Ebene der übereinander gestapelten plattenförmigen Komponenten des Brennstoffzellenblockes.

Zur Versorgung eines Flüssigkeits- oder Gasraumes wurde bisher ein Kanal verwendet, der durch das Zusammenlegen zweier Zwischenlagen, die in der Plattenebene verlaufende Nuten aufweisen, gebildet wird. Diese Nuten müssen im Bereich der Dichtungen abgestützt werden. Die Funktion eines aus zwei Zwischenlagen gebildeten Bauelements wurde durch die Anordnung der Nuten bereits vor der Herstellung der Zwischenlagen festgelegt. Eine Verwendung dieses Bauelements für eine andere Aufgabe, d. h. zur Versorgung eines anderen Flüssigkeits- oder Gasraumes ist daher nachteiligerweise nicht möglich. Brennstoffzellen, die diese Art von Bauelementen aufweisen, sind beispielsweise aus den deutschen Patentschriften 1 930 116 und 27 29 640 bekannt. Diese aus zwei Zwischenlagen gebildeten Bauelemente haben darüberhinaus den weiteren Nachteil, daß ihre Dicke aus konstruktiven Gründen so groß ist, daß ihre Verwendung beispielsweise in einem Block aus PEM-Brennstoffzellen aus vielfältigen Gründen nachteilig ist.

Der Erfindung liegt daher die Aufgabe zugrunde, einen Brennstoffzellenblock mit einem Bauelement anzugeben, das ebenfalls aus zwei Zwischenlagen gebildet wird und die Ver- und Entsorgung durch in der Plattenebene verlaufende Nuten sowohl des Raumes zwischen den Zwischenlagen als auch der darunter- und darüberliegenden Räume ermöglicht. Hierbei soll das Bauelement zur Anpassung an unterschiedliche Funktionen (Gasversorgung, Flüssigkeitsversorgung) vor und während des Aufbaus beispielsweise eines Brennstoffzellenblockes einfach modifizierbar sein. Dabei soll die Verwendung eines solchen Bauelementes zu einem Brennstoffzellenblock führen, die sich durch einen niedrigen Herstellungspreis, durch eine hohe Betriebssicherheit und besonders durch einen einfachen Aufbau auszeichnet.

Die Aufgabe wird erfindungsgemäß dadurch gelöst, daß ein Bauelement, eingebaut in einen Brennstoffzellenblock, vorgesehen ist, daß zwei zueinander parallel angeordnete Platten umfaßt, die zusammen mit beidseitig anliegenden flächigen Bauteilen der Einrichtung beidseitig des Bauelementes je einen ersten und zweiten Raum bilden, wobei von den beiden Platten ein dritter Raum zwischen denselben gasdicht umschlossen ist und mindestens ein ebenfalls zwischen den Platten in der Plattenebene verlaufender gasdichter Kanal, der eingangsseitig mit mindestens einem beliebigen Vorraum in Verbindung steht, vorgesehen ist, wobei die Mündungsseite des Kanals bedarfsweise an mindestens einen der drei Räume anschließbar ist.

Hierdurch ist es möglich, mindestens einen der drei genannten Räume mit dem in dem Vorraum zuströmenden Medium zu versorgen oder das in mindestens einem der drei Räume befindliche Medium aus diesem abzuführen.

In vorteilhafter Weiterbildung der Erfindung kann der Vorraum bei einer Stapelanordnung von plattenförmigen Bauteilen der Einrichtung ein durch Durchbrüche in diesen plattenförmigen Bauteilen gebildeter, senkrecht zur Plattenebene verlaufender, axialer Kanal sein. Dies bedeutet im besonderen, daß es mit drei vorhandenen axialen Kanälen mit den korrespondierenden, in der Plattenebene verlaufenden Kanälen möglich ist, die drei genannten Räume jeweils mit verschiedenen Medien zu beaufschlagen.

Hiermit ist eine weitere Ausgestaltung der Erfindung bereits angesprochen worden, bei der mehrere axiale Kanäle im Randbereich der Stapelanordnung vorgesehen sein können. Hierdurch ist es möglich, die Zufuhr von verschiedenen Medien zu den einzelnen Bauteilen der verfahrenstechnischen Einrichtung, z. B. des Brennstoffzellenblockes, durch die axialen Kanäle im äußeren Bereich der Stapelanordnung, also auch im äußeren Bereich der Platten des Bauelementes, vorzusehen. Dadurch kann der innere Bereich zur Aufnahme spielsweise einer Anode oder Kathode oder eines Elektrolyten, die jeweils als flache Schichten mit einer beispielsweise quadratischen Grundfläche vorliegen, genutzt werden.

Hierbei ist es besonders sinnvoll, wenn die axialen Kanäle gegeneinander gasdicht abschließbar sind. Hierdurch wird erreicht, daß beispielsweise mittels einer Dichtung ein gasdichter Abschluß der axialen Kanäle gegeneinander erzielt wird und daß ein in einem axialen Kanal zuströmendes Medium nur über mindestens einen in der Plattenebene verlaufenden Kanal in einen der drei genannten Räume zuführbar ist. Dies ist letztendlich auch die Voraussetzung dafür, daß das Bauelement an verschiedenen Stellen innerhalb einer Stapelanordnung von Brennstoffzellen, also einem Brennstoffzellenblock, angeordnet sein kann. Auf diese Weise kann beispielsweise zwischen zwei erfindungsgemäßen Bauelementen parallel zur Plattenebene eine Anode und eine Kathode angeordnet sein, zwischen denen sich ein Sauerstoffionen, ein Protonen- oder ein Hydroxidionenleitender Elektrolyt befindet. Hierdurch eignen sich die Bauelemente in direkter Umfassung der Elektrolyt-Elektrodeneinheit zur Zuführung der Gase zum Anoden- oder Kathodengasraum sowie zur Zu- und Abfuhr eines Kühlmediums und darüberhinaus zum Aufbau eines Druckkissens.

Weiterhin kann zwischen zwei Bauelementen parallel zur Plattenebene eine Befeuchtermembran, einen Gasraum und eine weitere Befeuchtermembran in der genannten Reihenfolge angeordnet sein. Hierdurch ist ein vorteilhafter Einsatz der erfindungsgemäßen Bauelemente innnerhab eines Brennstoffzellenblockes als Bestandteil einer Gasbefeuchtereinheit möglich.

Um bei der Zu- und Abfuhr von flüssigen oder gasförmigen Medien eine besonders hohe Betriebssicherheit der verfahrenstechnischen Einrichtung zu erreichen, kann das Bauelement eine oder mehrere der nachfolgend genannten Eigenschaften aufweisen. Es sind dies:
a) Die beiden Platten des Bauelementes sind zum gasdichten Abschluß des dritten Raumes an ihren Rändern miteinander verschweißt.
b) Die beiden Platten des Bauelementes sind um die im Wandbereich eingelassenen Durchbrüche herum gasdicht miteinander verschweißt;
c) Die in der Plattenebene verlaufenden Kanäle sind zur Versorgung des ersten oder zweiten Raumes innerhalb der die Durchbrüche umschließenden Schweißnaht zum gewünschten ersten oder zweiten Raum hin durch Aufbohren der den entsprechenden Raum begrenzenden Platte geöffnet; oder
d) Der in Plattenebene verlaufende gasdichte Kanal zur Versorgung des dritten Raumes zwischen den beiden Platten ist bei der Umschweißung des ihm zugeordneten Durchbruches ausgenommen.

Besonders die obenstehend unter den Ziffern c) und d) genannten Eigenschaften gewährleisten auch die leichte Modifizierbarkeit des Bauelementes zur Versorgung von mindestens einem der drei genannten Räume. Darüberhinaus bedeutet dies, daß das Bauelement sogar noch beim Aufbau einer verfahrenstechnischen Einrichtung leicht an den gewünschten Verwendungszweck angepaßt werden kann.

Weitere vorteilhafte Ausgestaltungen der Erfindung sind den übrigen Unteransprüchen zu entnehmen.

Ausführungsbeispiele der Erfindung werden anhand der nachfolgenden Figuren näher erläutert. Dabei zeigen:
- Figur 1: einen Teilquerschnitt einer Stapelanordnung von Zwischenlagen einer Brennstoffzelle entsprechend dem Stand der Technik (P 21 29 187.2);
- Figur 2: einen anderen Teilquerschnitt durch eine Stapelanordnung von Zwischenlagen der Brennstoffzelle von Figur 1 entsprechend dem Stand der Technik (P 21 29 187.2);
- Figur 3: eine Aufsicht auf ein erfindungsgemäß verwendetes Bauelement;
- Figur 4: einen Teilquerschnitt durch einen erfindungsgemäßen Brennstoffzellenblock mit drei Bauelementen;
- Figur 5: einen anderen Teilquerschnitt durch den erfindungsgemäßen Brennstoffzellenblock der Figur 4 mit drei Bauelementen; und
- Figur 6: einen weiteren Teilquerschnitt durch den erfindungsgemäßen Brennstoffzellenblock der Figur 4 mit drei Bauelementen.

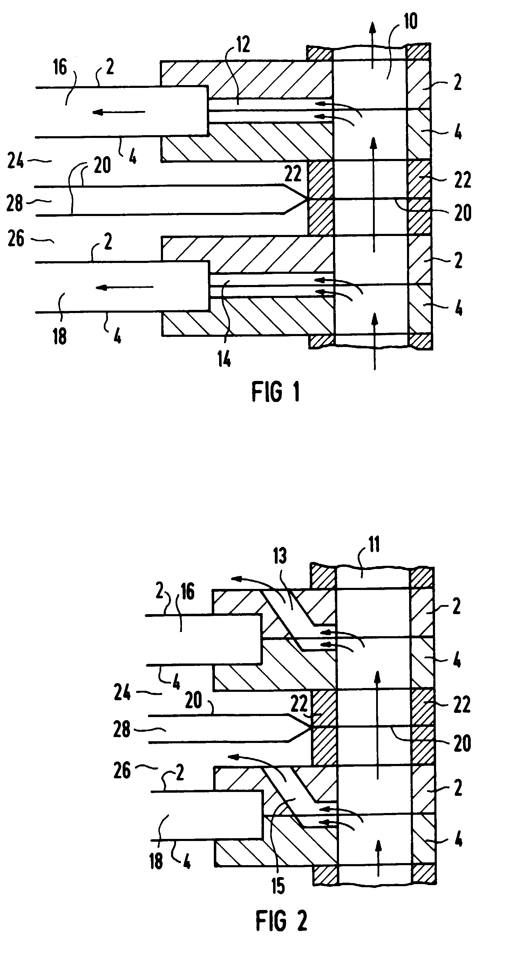

In dem in Figur 1 dargestellten Ausschnitt eines Schnittes durch eine Stapelanordnung von Zwischenlagen 2, 4 eines Brennstoffzellenblockes sind senkrecht zu einem axialen Kanal 10 zwei radiale Kanäle 12, 14 angeordnet. Über die radialen Kanäle 12, 14 werden jeweils zwischen den Zwischenlagen 2, 4 liegende Räume 16, 18 versorgt. Zwischen der Zwischenlage 4 und der Zwischenlage 2 ist ein weiteres Bauteil 20, das beispielsweise zur Aufnahme eines hier nicht weiter dargestellten Kühlmittels oder Druckgases (Druckkissen) verwendet sein kann, eingebaut und mittels Dichtungen 22 gegenüber den Zwischenlagen 2, 4 beabstandet und abgedichtet. Die in Figur 1 dargestellte Anordnung eignet sich nur zur Versorgung der Räume 16, 18 mit einem flüssigen oder gasförmigen Medium. Die oberhalb, unterhalb und zwischen dem Bauteil 20 liegenden Räume 24, 26, 28 können mit dieser Anordnung nicht versorgt werden.

Um beispielsweise den Raum 26 unterhalb des Bauteils 20 mit einem flüssigen oder gasförmigen Medium versorgen zu können, müssen die Zwischenlagen 2, 4 gegenüber der Figur 1 anders ausgebildet und in einem ansonsten gegenüber der Figur 1 unveränderten Aufbau eingesetzt werden, wie dies in der Figur 2 mit den radialen Kanälen 13, 15 dargestellt ist. Zur Versorgung der vier sich entlang einer Stapelanordnung von Zwischenlagen 2, 4, Dichtungen 22 und Bauteilen 20 eines hier nicht weiter dargestellten Brennstoffzellenblock wiederholenden Räume 16, 24, 26, 28 müssen daher über die in der Figur 1 und Figur 2 dargestellten Ausschnitte aus den Zwischenlagen 2, 4, noch weitere radiale Kanäle in den Zwischenlagen 2, 4 vorgesehen sein, über die auch die Räume 24, 28 mit einem flüssigen oder gasförmigen Medium, das durch weitere entsprechende axiale Kanäle einströmt, versorgt werden.

Die Gestaltung der radialen Kanäle 12 - 15 entsprechend Figur 1 und 2 ist nur dann möglich, wenn die Brennstoffzelle einen Elektrolytraum mit relativ großer Dicke (ca. 1,8 mm) und dicken Elektroden (ca. 1 mm) aufweist. Besteht der Elektrolyt nur aus einer Membrane (ca. 0,2 mm) oder einer Elektrolytmatrix (ca. 0,2 mm) und werden nur dünne Elektroden (< 0,1 mm) eingesetzt, so werden die Zwischenlagen 2, 4 überflüssig. Die Dichtung 22 dichtet dann direkt am Membranelektrolyten, der Elektrolytmatrix oder einem dünnen Rahmen, in dem die Elektrolytmatrix dicht eingebaut ist, deren Dicke aber für radiale Kanäle 12 - 15 gemäß Figur 1 und 2 nicht ausreicht. In diesem Fall müssen die radialen Kanäle 12 - 15 in die Dichtung 22 oder in die Bauteile 20 integriert werden. Jede andere Form erhöht den Aufwand von teueren Materialien und den Innenwiderstand des Brennstoffzellenblockes, vergrößert den Fertigungsaufwand und kostet zusätzliches Gewicht und Volumen.

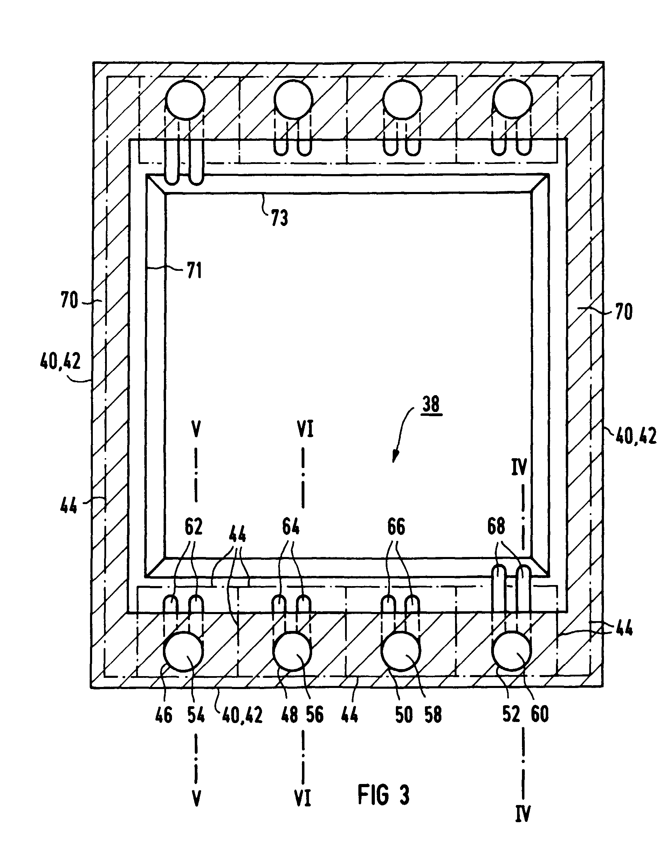

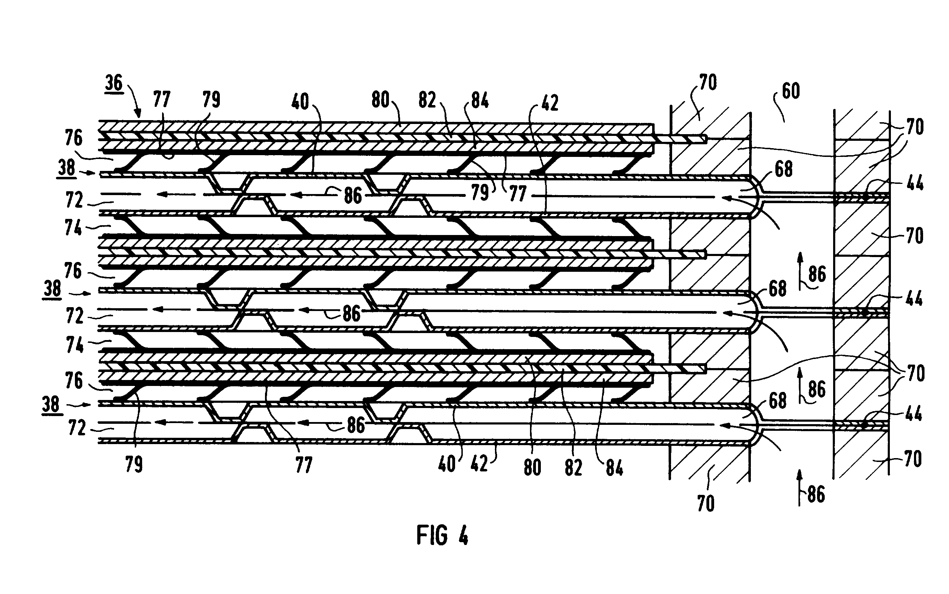

Die Figur 3 zeigt in Aufsicht ein Bauelement 38, das zwei zueinander parallel angeordnete Platten 40, 42 umfaßt. Die Platten 40, 42 sind mittels einer gasdichten Schweißnaht 44 (strichpunktiert angedeutet) miteinander verbunden. Mittels der Schweißnaht 44 wird zwischen den Platten 40, 42 ein flacher quaderförmiger, strukturierter Raum mit einer im Ausführungsbeispiel quadratischen mit den Linien 71, 73 umschriebenen Grundfläche gasdicht eingeschlossen. Die Struktur der Platten 40, 42 ist dabei so ausgestaltet, daß die Erhebungen, die in den Figuren 4 - 6 näher dargestellt sind, der Platten 40, 42 zur axialen Stromleitung anliegen. Durch diese Struktur ist gleichzeitig die Durchlässigkeit für flüssige und gasförmige Medien in radialer Richtung (in Plattenebene) zwischen den Platten 40, 42 gewährleistet.

In den Platten 40, 42 sind Durchbrüche 46 - 52 vorgesehen, die einen Teil der axialen Kanäle 54 - 60 bilden. An die axialen Kanäle 54 - 60 schließen sich jeweils zwei in der Plattenebene verlaufende Kanäle 62 - 68 an. Die Kanäle 62 - 68 entstehen dabei durch das Zusammenfügen der Platten 40, 42, die deckungsgleich eingeprägte, halbrunde, rillenförmige Vertiefungen aufweisen. Die Kanäle 62, 64, 66 sind zunächst identisch ausgebildet und werden dann in Abhängigkeit von dem zu versorgenden Raum nach oben oder nach unten geöffnet. Einzigallein die Kanäle 68 sind gegenüber den Kanälen 62 - 66 länger ausgeführt und zunächst zur Versorgung des Raumes zwischen den Platten 40, 42 vorgesehen. Die Kanäle 68 können aber ebenso die Funktion der Kanäle 62 - 66 einnehmen, wenn die Schweißnaht 44 senkrecht zu den Kanälen 68 durchgezogen würde, wie es bei den Kanälen 62 - 66 ausgestaltet ist.

Durch die Schraffur in der Figur 3 ist eine Dichtung 70 angedeutet, die sich oberhalb und unterhalb der Platten 40, 42 befindet und die axialen Kanäle 54 - 60 gegeneinander abdichtet und den Raum oberhalb und den Raum unterhalb der Platten 40, 42 nach den Seiten gegenüber der Umgebung abdichtet. Die Dichtung 70 besteht beispielsweise aus einem Elastomer und hat im Ausführungsbeispiel eine Dicke von etwa 3 mm. Vollständig begrenzt wird der Raum oberhalb und der Raum unterhalb der Platten 40, 42 durch das Aufstapeln eines weiteren Bauelements 38 oder einer weiteren Funktionseinheit auf die Dichtung 70. Dies kann beispielsweise eine in den Figuren 4 - 6 dargestellte Elektrolyt-Elektrodeneinheit als Funktionseinheit sein, in die in der Reihenfolge ein Kontaktblech 77, eine Platte aus Kohlepapier, eine Anode 80, eine PEM 82 (Polymer-Elektrolyt-Membran), eine Kathode 84 eine weitere Platte aus Kohlenpapier und ein weiteres Kontaktblech 77 eingebaut sind.

Der Raum unterhalb des Bauelements 38 könnte beispielsweise durch ein nicht weiter dargestelltes Funktionselement, das in der Reihenfolge eine Befeuchtermembran, einen Gasraum und eine weitere Befeuchtermembran aufweist, abgeschlossen sein. In dem in Figur 3 dargestellten Ausführungsbeispiel ist eine Versorgung des Raumes unterhalb der Platten 40, 42 des Bauelements 38 über den axialen Kanal 54 sowie die Kanäle 62 vorgesehen. Im angenommenen Fall einer sich unterhalb der Platten 40, 42 des Bauelements 38 anschließenden Befeuchtermembran wird dieser Raum mit Wasser beaufschlagt, um das durch den unterhalb der Befeuchtermembran angeordneten Gasraum strömende Gas zu befeuchten. Dies ist im hier angenommenen Ausführungsbeispiel ein Wasserstoffgas.

Das befeuchtete Wasserstoffgas kann anschließend beispielsweise durch den axialen Kanal 56 und die Kanäle 64 in den Raum oberhalb der Platten 40, 42 eingeleitet und damit einer im Ausführungsbeispiel angenommenen darüber angeordneten Anode zugeführt werden. Über den axialen Kanal 60 und die Kanäle 68 wird im Ausführungsbeispiel der Raum zwischen den Platten 40, 42 mit Kühlwasser beaufschlagt. Durch den axialen Kanal 58 strömt im Ausführungsbeispiel Sauerstoff. Da keiner der mittels des Bauelements 38 zu versorgenden Räume im angenommenen Fall mit Sauerstoffgas beaufschlagt werden muß, sind die Kanäle 66 umschweißt und weder durch die obere Platte 40 noch durch die untere Platte 42 angebohrt und damit geöffnet worden.

Aufgrund des punktsymmetrischen Aufbaus des Bauelementes 38 ist es möglich, die über die axialen Kanäle 54, 56, 60 und die radialen Kanäle 62, 64, 68 zugeführten Medien auf der gegenüberliegenden Seite (in der zeichnerischen Darstellung oben) des Bauelementes 38 wieder durch spiegelbildliche Kanäle abzuführen. Hierbei sind die spiegelbildlichen Kanäle so angeordnet, daß die Medien im wesentlichen eine in der Plattenebene diagonale Strömung beschreiben.

In den Figuren 4 bis 6 sind Ausschnitte aus verschiedenen Schnitten in axialer Richtung durch einen Brennstoffzellenblock 36 mit mehreren erfindungsgemäßen Bauelementen 38 dargestellt.

Der in Figur 4 dargestellte Ausschnitt zeigt dabei einen Schnitt durch den Brennstoffzellenblock 36 gemäß der Linie IV - IV in Figur 3. Im Gegensatz zu der in Figur 3 dargestellten Aufsicht auf ein Bauelement 38 sind hier die Dichtungen 70 im Schnitt dargestellt. Jeweils zwischen zwei Bauelementen 38 ist eine Elektrolyt-Elektrodeneinheit, bestehend der Reihenfolge nach aus einem Kontaktblech 77 mit ausgestanzten Kontaktzungen 79, einer Anode 80, einer PEM 82 und einer Kathode 84 sowie einem weiteren Kontaktblech 77, eingebaut. Die Anode 80 und die Kathode 84 weisen jeweils auf der der PEM 82 abgewandten Seite eine Schicht aus Kohlepapier auf, die jedoch hier nicht weiter dargestellt ist.

Das durch den axialen Kanal 60 heranströmende Kühlwasser 86 strömt über die Kanäle 68 in die von den Platten 40, 42 gas- und wasserdicht eingeschlossenen Räume 72. Mit den Bezugszeichen 76 und 74 sind die oberhalb bzw. unterhalb der Platten 40, 42 angeordneten Räume gekennzeichnet.

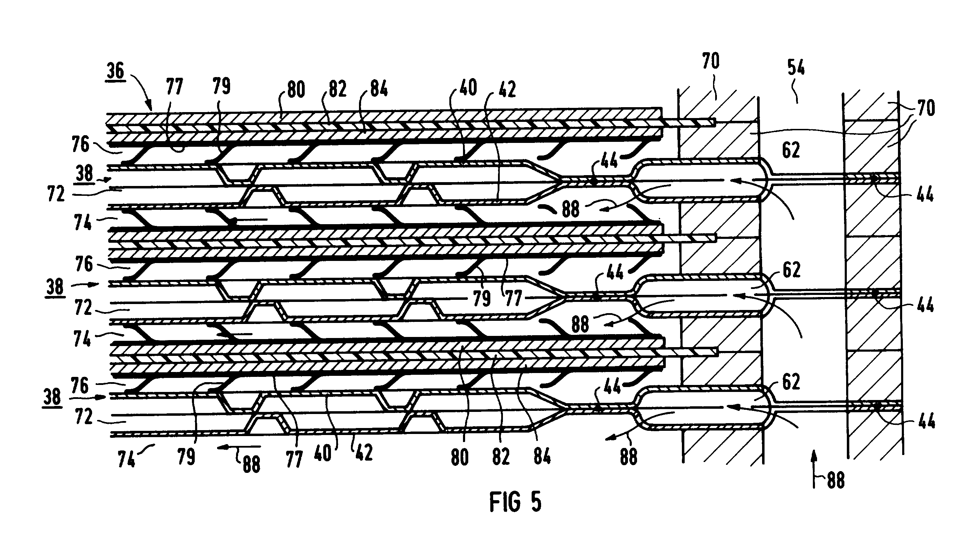

Die Figur 5 zeigt einen Schnitt aus einem Brennstoffzellenblock 36 längs der Linie V - V der Figur 3. Durch den axialen Kanal 54 strömt Wasserstoffgas (H₂) 88 und weiter durch die Kanäle 62 in die unterhalb der Platten 42 befindlichen Räume 74. Nach unten hin sind die Räume 74 jeweils durch die sich in axialer Richtung nach dem Kontaktblech 77 anschließende Anode 80 und PEM 82 begrenzt. Die von den Platten 40, 42 eingeschlossenen Räume 72 werden durch die Schweißnähte 44 gegenüber den Kanälen 62 gasdicht abgeschlossen. Die Öffnung der Kanäle 62 zu den Räumen 74 geschieht durch einfaches Aufbohren der Platten 42.

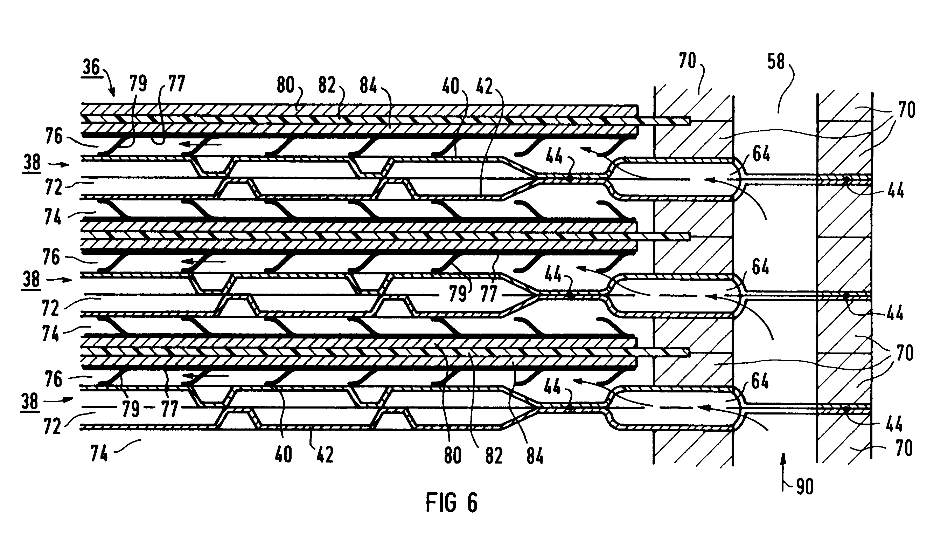

Die Figur 6 zeigt einen Schnitt durch den Brennstoffzellenblock 36 längs der LInie VI - VI der Figur 3. Der axiale Kanal 58 wird von Sauerstoffgas (O₂) 90 durchströmt, das über die radialen Kanäle 64 in die oberhalb der Platten 40 befindlichen Räume 76 einströmt. Die Räume 76 sind jeweils durch die sich nach dem Kontaktblech 77 anschließende Kathode 84 und den Membranelektrolyten (PEM) 82 verschlossen. Die Öffnung der Kanäle 64 zu den Räumen 76 geschieht hier durch einfaches Aufbohren der Platten 40.

Mittels des Bauelementes 38 ist es somit auf einfache Weise möglich, jeden beliebigen axialen Kanal 54 - 60 über die Kanäle 62 - 68 wahlweise in einen der drei Räume 72, 74, 76 münden zu lassen. Zur Versorgung des Raums 72 ist der radiale Kanal 68 nicht zu modifizieren. Zur Versorgung der Räume 74 und 76 sind die Kanäle, die mit Schweißnähten 44 umschlossen sind, entsprechend den Figuren 5 und 6 in der Platte 42 bzw. in der Platte 40 zu öffnen. Die Platten 40, 42 und die Schweißnaht 44 sind dabei derart konzipiert, daß sie den beim Betrieb eines Brennstoffzellenblockes 36 vorherrschenden Drücken in den einzelnen Flüssigkeits- und Gasräumen standhalten. Es sind dies beispielsweise ein Wasserstoffdruck von 2,0 bar, ein Sauerstoffdruck von 2,3 bar.

Zur Beabstandung der Platten 40, 42 können alternativ zu halbkugelförmigen Erhebungen auch halbrunde rillenförmige Erhebungen oder kegelstumpfförmige Erhebungen 92 in den Platten 40, 42 vorgesehen sein, deren Struktur gegeneinander versetzt angeordnet ist. Die halbkugelförmigen oder halbrund-rillenförmigen oder kegelstumpfförmigen Erhebungen 92 definieren dabei das Volumen und die Struktur des von den Platten 40, 42 eingeschlossenen Raums 72.

Zum Einsatz des Bauelementes 38 in einen Brennstoffzellenblock mit einer kompakten Stapelanordnung von einzelnen Bauteilen ergibt sich eine besonders vorteilhafte Ausbildung der Erhebungen der Platten 40, 42 des Bauelementes 38, wenn die Platten 40, 42 ihren gegenseitigen Abstand bestimmende kegelstumpfförmige Erhebungen 92 aufweisen. Deren Mittelpunkte spannen die Fläche eines gleichseitigen Dreiecks auf. Diese gleichseitigen Dreiecke sind an unmittelbar aneinanderliegenden Platten 40, 42 um etwa den halben Abstand benachbarter kegelstupfförmiger Erhebungen 92 gegeneinander versetzt angeordnet. Dabei ist der kleinste Radius der kegelstumpfförmigen Erhebung größer als der halbe Radius des das gleichseitige Dreieck umschreibenden Kreises. Hierdurch ergibt sich, daß beispielsweise ein Kegelstumpf der Platte 40 konzentrisch zu dem gleichseitigen Dreieck, das aus drei Kegelstümpfen der Platte 42 gebildet wird, angeordnet ist und gleichzeitig auf den drei Kegelstümpfen aufliegt. Ein Ineinanderrutschen der Erhebungen benachbarter Platten 40, 42 ist damit zuverlässig ausgeschlossen.

## Patentansprüche

1. Brennstoffzellenblock (36), der zwei zueinander parallel angeordnete Platten (40, 42) umfaßt, die zusammen mit beidseitig anliegenden flächigen Bauteilen (80, 84) einen ersten Raum (76) und einen zweiten Raum (74) bilden, wobei von den beiden Platten (40, 42) ein dritter Raum (72) zwischen denselben gasdicht umschlossen ist und mindestens ein ebenfalls zwischen den Platten (40, 42) in der Plattenebene verlaufender gasdichter Kanal (62 - 68), der eingangsseitig mit einem Vorraum (54 - 60) in Verbindung steht, vorgesehen ist, und wobei die Mündungsseite des Kanals (62 - 68) an mindestens einen der drei Räume (72 - 76) angeschlossen ist.

2. Brennstoffzellenblock (36) nach Anspruch 1, **dadurch gekennzeichnet**, daß der Vorraum (54 - 60) bei einer Stapelanordnung von plattenförmigen Bauteilen ein durch Durchbrüche (46 - 52) in diesen plattenförmigen Bauteilen (40, 42) gebildeter senkrecht zur Plattenebene verlaufender axialer Kanal (54 - 60) ist.

3. Brennstoffzellenblock (36) nach Anspruch 2, **dadurch gekennzeichet**, daß mehrere axiale Kanäle (54 - 60) im Randbereich der Stapelanordnung vorgesehen sind.

4. Brennstoffzellenblock (36) nach einem der Ansprüche 1 - 3, **dadurch gekennzeichnet**, daß die Platten (40, 42) zum gasdichten Abschluß des dritten Raumes (72) an ihren Rändern miteinander verschweißt sind.

5. Brennstoffzellenblock (36) nach einem der Ansprüche 1 - 4, **dadurch gekennzeichnet**, daß die beiden Platten (40, 42) um die im Randbereich eingelassenen Durchbrüche (46 - 52) herum gasdicht miteinander verschweißt sind.

6. Brennstoffzellenblock (36) nach einem der Ansprüche 1 - 5, **dadurch gekennzeichnet**, daß die in der Plattenebene verlaufenden gasdichten Kanäle (62 - 68) zur Versorgung des ersten oder zweiten Raumes (76, 74) innerhalb der die Durchbrüche (46 - 52) umschließenden Schweißnaht (44) zum gewünschten ersten oder zweiten Gasraum (76, 74) hin durch Aufbohren der den Raum begrenzenden Platte (40, 42) geöffnet sind.

7. Brennstoffzellenblock (36) nach einem der Ansprüche 1 - 5, **dadurch gekennzeichnet**, daß der in Plattenebene verlaufende gasdichte Kanal (68) zur Versorgung des dritten Raumes (72) zwischen den beiden Platten (40, 42) bei der Umschweißung des ihm zugeordneten Durchbruches (52) ausgenommen ist.

8. Brennstoffzellenblock (36) nach einem der Ansprüche 1 bis 7, **dadurch gekennzeichnet**, daß die axialen Kanäle (54 - 60) mittels Dichtungen (70) gegeneinander gasdicht abschließbar sind.

9. Brennstoffzellenblock (36) nach einem der Ansprüche 1 bis 8, **dadurch gekennzeichnet**, daß die Platten (40, 42) eine den zwischen den Platten (40, 42) liegenden dritten Raum (72) definierende Struktur (92) aufweisen.

10. Brennstoffzellenblock (36) nach Anspruch 9, **dadurch gekennzeichnet**, daß die Platten (40, 42) ihren gegenseitigen Abstand bestimmende kegelstumpfförmige Erhebungen (92) aufweisen, deren Mittelpunkte die Fläche eines gleichseitigen Dreiecks aufsDannen, wobei die Struktur der unmittelbar aneinander liegenden Platten (40, 42) um etwa den halben Abstand benachbarter Kegelstümpfe versetzt angeordnet ist und der kleinste Radius der kegelstumpfförmigen Erhebung größer ist als der halbe Radius des das gleichseitige Dreieck umschreibenden Kreises.

11. Brennstoffzellenblock (36) nach einem der Ansprüche 1 bis 10, **dadurch gekennzeichnet**, daß die Platten (40, 42) aus einem nichtrostenden, metallischen Material bestehen.

## Claims

1. Fuel cell block (36) which comprises two plates (40, 42) arranged parallel to each other, which together with flat structural parts (80, 84) abutting on both sides form a first chamber (76) and a second chamber (74), whereby the two plates (40, 42) enclose a third chamber (72) between them in a gastight manner and there is provided at least one gastight channel (62 - 68), likewise extending between the plates (40, 42) in the plane of the plates, which channel is connected on the input side to an antechamber (54 - 60), and whereby the opening side of the channel (62 - 68) is connected to at least one of the three chambers (72 - 76).

2. Fuel cell block (36) according to claim 1, characterized in that the antechamber (54 - 60) in a stack arrangement of plate-shaped structural parts is an axial channel (54 - 60) formed by openings (46 - 52) in these plate-shaped structural parts (40, 42) and extending perpendicular to the plane of the plates.

3. Fuel cell block (36) according to claim 2, characterized in that several axial channels (54 - 60) are provided in the edge region of the stack arrangement.

4. Fuel cell block (36) according to one of claims 1 - 3, characterized in that for the gastight sealing of the third chamber (72) the plates (40, 42) are welded to each other at their edges.

5. Fuel cell block (36) according to one of claims 1 - 4, characterized in that the two plates (40, 42) are welded to each other in a gastight manner about the openings (46 - 52) made in the edge region.

6. Fuel cell block (36) according to one of claims 1 - 5, characterized in that the gastight channels (62 - 68) extending in the plane of the plates for supplying the first or second chamber (76, 74) within the welding seam (44) enclosing the openings (46 - 52) are opened towards the desired first or second gas chamber (76, 74) by drilling the plate (40, 42) bordering the chamber.

7. Fuel cell block (36) according to one of claims 1 - 5, characterized in that the gastight channel (68) extending in the plane of the plates for supplying the third chamber (72) between the two plates (40, 42) is not included during the peripheral welding of the opening (52) associated therewith.

8. Fuel cell block (36) according to one of claims 1 to 7, characterized in that the axial channels (54 - 60) can be sealed in a gastight manner from each other by means of seals (70).

9. Fuel cell block (36) according to one of claims 1 to 8, characterized in that the plates (40, 42) have a structure (92) which defines the third chamber (72) lying between the plates (40, 42).

10. Fuel cell block (36) according to claim 9, characterized in that the plates (40, 42) have truncated-cone-shaped elevations (92) determining their mutual spacing, the centre points of which elevations define the area of an equilateral triangle, whereby the structure of the plates (40, 42) directly abutting each other is staggered by about half the spacing of adjacent truncated cones and the smallest radius of the truncated-cone-shaped elevation is larger than half the radius of the circle which circumscribes the equilateral triangle.

11. Fuel cell block (36) according to one of claims 1 to 10, characterized in that the plates (40, 42) are formed from a rust-resistant, metallic material.

## Revendications

1. Batterie (36) de piles à combustible, qui comprend deux plaques (40, 42) parallèles entre elles qui forment conjointement avec des parties constitutives planes (80, 84) s'appliquant des deux côtés, une première chambre (76) et une seconde chambre (74), une troisième chambre (72) étant entourée par les deux plaques (40, 42) entre celles-ci de manière étanche au gaz et il est prévu au moins un canal (62 à 68) étanche au gaz s'étendant également entre les plaques (40, 42) dans le plan des plaques et communiquant en entrée avec une antichambre (54 à 60), le côté embouchure du canal (62 à 68) étant relié à au moins l'une des trois chambres (72 à 76).

2. Batterie (36) de piles à combustible suivant la revendication 1, caractérisée en ce que l'antichambre (54 à 60) est, pour un empilage de parties constitutives en forme de plaque, un canal (54 à 60) axial formé par des trous (46 à 52) dans ces parties constitutives en forme de plaque et s'étendant perpendiculairement au plan des plaques.

3. Batterie (36) de piles à combustible suivant la revendication 2, caractérisée en ce qu'il est prévu plusieurs canaux axiaux (54 à 60) dans la zone du bord de l'empilage.

4. Batterie (36) de piles à combustible suivant l'une des revendications 1 à 3, caractérisée en ce que les plaques (40, 42) sont soudées entre elles par leurs bords pour la fermeture étanche au gaz de la troisième chambre (72).

5. Batterie (36) de piles à combustible suivant l'une des revendications 1 à 4, caractérisée en ce que les deux plaques (40, 42) sont soudées entre elles de manière étanche au gaz autour des trous (46 à 52) ménagés dans la zone de bord.

6. Batterie (36) de piles de combustible suivant l'une des revendications 1 à 5, caractérisée en ce que les canaux (62 à 68) étanches au gaz s'étendant dans le plan des plaques sont ouverts, pour l'alimentation de la première ou de la seconde chambre (76, 74) à l'intérieur du cordon (44) de soudure entourant les trous (46 à 52) vers la première ou seconde chambre (76, 74) de gaz souhaitée par alésage de la plaque (40, 42) délimitant la chambre.

7. Batterie (36) de piles à combustible suivant l'une des revendications 1 à 5, caractérisée en ce que le canal (68) étanche au gaz, s'étendant dans le plan des plaques, et destiné à l'alimentation de la troisième chambre (72) entre les deux plaques (40, 42) est évidé lors de la soudure du trou (52) qui lui est associé.

8. Batterie (36) de piles à combustible suivant l'une des revendications 1 à 7, caractérisée en ce que les canaux axiaux (54 à 60) peuvent être fermés de manière étanche au gaz les uns par rapport aux autres au moyen de garnitures (70) d'étanchéité.

9. Batterie (36) de piles à combustible suivant l'une des revendications 1 à 8, caractérisée en ce que les plaques (40, 42) ont une structure (92) définissant la troisième chambre (72) se trouvant entre les plaques (40, 42).

10. Batterie (36) de piles à combustible suivant la revendication 9, caractérisée en ce que les plaques (40, 42) ont des élévations tronconiques, qui déterminent leur distance mutuelle et dont les milieux forment la surface d'un triangle équilatéral, la structure des plaques (40, 42) s'appliquant directement l'une à l'autre étant décalée d'à peu près la moitié de la distance de troncs de cône voisins et le plus petit rayon de l'élévation tronconique est supérieur à la moitié du rayon du cercle circonscrit au triangle équilatéral.

11. Batterie (36) de piles à combustible suivant l'une des revendications 1 à 10, caractérisée en ce que les plaques (40, 42) sont en un matériau métallique antirouille.
